# EUROPEAN PATENT SPECIFICATION

(11) **EP 3 464 029 B1**
(45) Date of publication and mention of the grant of the patent: **23.03.2022**
(21) Application number: 17727334.9
(22) Date of filing: 25.05.2017
(51) Int. Cl.: B60K 5/02, B60K 5/10, B60K 5/12, B60K 5/00, B60L 50/61, B62D 21/02, B60L 50/16

(54) **ELECTRIC VEHICLE CHASSIS**
ELEKTROFAHRZEUGCHASSIS
CHÂSSIS DE VÉHICULE ÉLECTRIQUE

(30) Priority: 31.05.2016 GB 201609528
(43) Date of publication of application: 10.04.2019
(73) Proprietor: Arrival Limited, Banbury OX16 2SN (GB)
(72) Inventor: TSE, Man Lok, Banbury Oxfordshire OX16 2SN (GB); JARDINE, Ben, Banbury Oxfordshire OX16 2SN (GB); DOWNING, Ian, Banbury Oxfordshire OX16 2SN (GB)
(74) Representative: Korenberg, Alexander Tal
(86) International application number: PCT/GB2017/051495
(87) International publication number: WO 2017/207970

(56) References cited:
- EP-A1- 2 979 945
- WO-A1-2010/081979
- DE-A1-102006 002 086
- US-A- 4 231 444
- US-A- 5 301 765
- US-A- 5 845 734
- US-A1- 2008 023 965

## Description

### Technical Field

The present invention relates to an electric vehicle chassis.

### Background

The drive for more fuel efficient and environmentally friendly transport solutions is seeing an increasing level of development in the field of electric vehicles. Such vehicles include not only passenger vehicles for personal transport, but also commercial vehicles such as buses and trucks. Such electric vehicles (EVs) are commonly powered by batteries which supply electrical power to the electric drive motor(s). Some electric vehicles, known as range extender electric vehicles (REEVs), are designed to be run mostly by batteries, but also include a range extender (RE) having a small internal combustion engine (ICE) to generate electricity to recharge the batteries when their charge is getting low, for example when the vehicle is used for long trips. It may be desirable to have an easy access to the range extender, for example for maintenance of the internal combustion engine, or for removal of the range extender from the vehicle to replace the range extender by a battery when the vehicle is to be used for a short distance travel and that the use of the range extender is not necessary. An example of a vehicle chassis is shown in US2008/023965.

### Summary

The above problem is solved by the combination of features set out in independent claim 1.

In accordance with embodiments of the invention, there is provided an electric vehicle chassis comprising: a structure extending along a longitudinal axis; and a frame for accommodating a range extender; the frame being mounted on a longitudinal side of the structure and in the region of a midpoint of said longitudinal side of the structure; wherein the frame is moveably mounted to the structure and is moveable relative to the structure between a retracted position and a deployed position and wherein the frame is movable outward from the structure from the retracted position towards the deployed position.

The frame may be slideable between the retracted position and the deployed position.

The structure may comprise a first arm and a second arm, wherein the frame may comprise a first wall and a second wall, the first and second walls extending substantially parallel to each other, and wherein the first and second walls are arranged to travel respectively along the first and second arms when the frame is moved between the retracted position and the deployed position.

The first and second walls and the first and second arms may be respectively connected to each other by means of first and second telescopic guides.

The frame may be moveable relative to the structure in a direction transverse to the longitudinal axis.

The chassis may comprise a frame actuator for automatically and/or automated actuating of the frame between the retracted and deployed positions.

The frame actuator may comprise an electrical or pneumatic or hydraulic actuator.

The chassis may comprise means for detecting if the frame is in the retracted position.

The chassis may comprise a locking mechanism to lock the frame in the retracted position.

The locking mechanism may be moveable between a locking position and a release position. The locking mechanism may be biased towards the locking position.

The chassis may comprise a locking mechanism actuator for automatically actuating the locking mechanism between the locking and release positions.

The locking mechanism actuator may comprise an electrical or pneumatic or hydraulic actuator.

The chassis may comprise means for identifying if the locking mechanism is in the locking position.

The frame may comprise one or more mounting brackets for securing the range extender to the frame.

The one or more mounting brackets may be are adjustable such that a battery pack or a different type of range extender can be secured to the frame by means of the one or more mounting brackets.

The chassis may comprise a range extender mounted to the frame, and the range extender may be removably mounted to the frame. A fuel tank may be mounted to the frame. The chassis may also comprise further components of an electric vehicle. The chassis may comprise one or more electric motors, and/or one or more batteries or battery packs. The chassis may also comprise one or more gearboxes and/or one or more inveters. The chassis may further comprise a suspension system and/or a steering system and/or one or more wheels.

Embodiments of the present invention also provide an electric vehicle comprising a chassis as described above.

The electric vehicle may comprise one or more electrical connectors for connecting the range extender to vehicle components in the chassis, wherein the only connection between the range extender and said vehicle components maybe said one or more electrical connectors.

The range extender may comprise an electric generator driven by an internal combustion engine.

### Brief Description of the Drawings

Embodiments of the present invention will now be described, by way of example only, with reference to the accompanying drawings, in which:
Fig. 1 shows a schematic view of an electric vehicle in accordance with an embodiment of the present invention;
Fig. 2 shows a perspective view of a chassis in accordance with an embodiment of the present invention;
Fig. 3 shows a perspective view of a range extender to be placed in a moveable frame of the chassis of Fig. 2;
Fig. 4 shows a perspective view of a moveable frame of the chassis of Fig. 2;
Fig. 5A shows a perspective view of the moveable frame of Fig. 4 mounted to a portion of the chassis of Fig. 2, the moveable frame being in a retracted position;
Fig. 5B shows a perspective view of the moveable frame of Fig. 4 mounted to a portion of the chassis of Fig. 2, the moveable frame being in a deployed position;

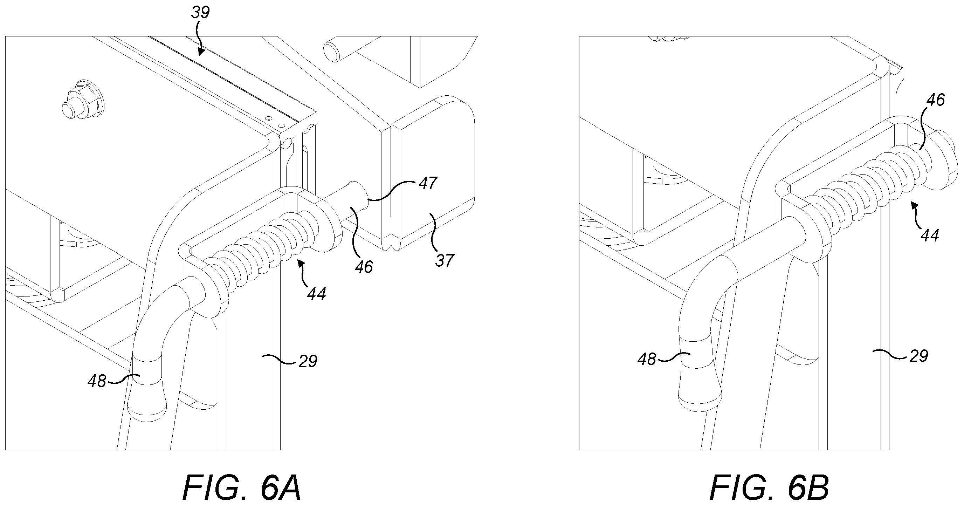

Fig. 6A is a detail of Fig. 4 showing a locking mechanism of the moveable frame, the locking mechanism being in a locking position;
Fig. 6B shows the locking mechanism of Fig. 6A, the locking mechanism being in a release position; and
Fig. 7 shows a perspective view of the moveable frame mounted to a portion of a chassis in accordance with a further embodiment of the present invention, the moveable frame being in the retracted position.

### Detailed Description

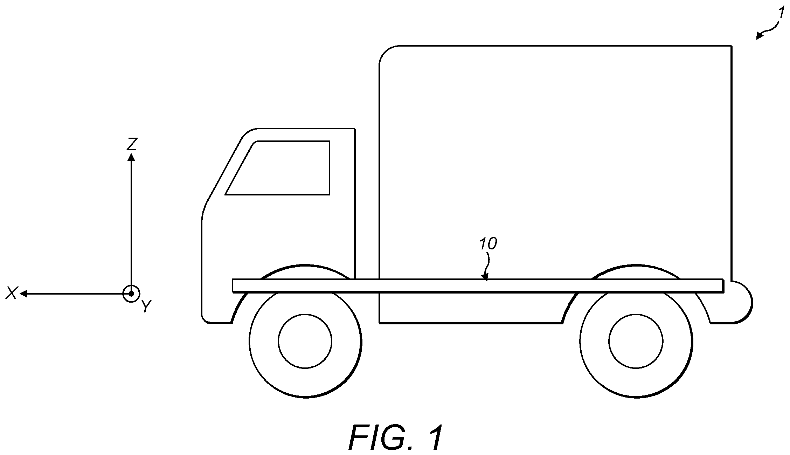

Fig. 1 shows an exemplary commercial REEV, namely an electric delivery truck 1, comprising a chassis 10 according to an embodiment of the present invention. It should be noted that the chassis 10 according to the present invention could be used in any other kind of REEV, such as an electric coach or an electric city bus for example.

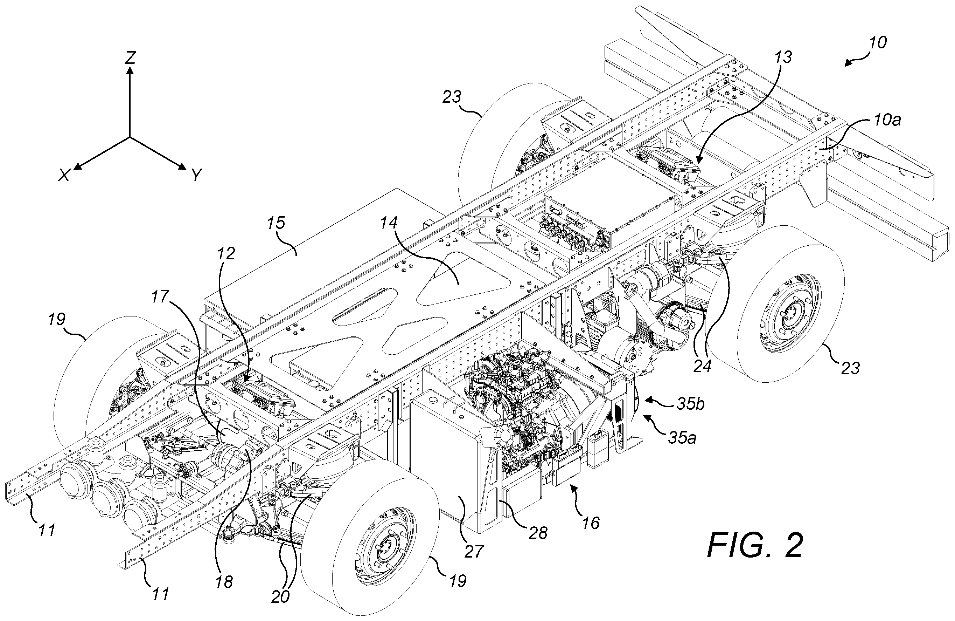

The chassis 10 is depicted in more detail in Fig. 2. The chassis 10 is described herein with reference to the major axes of the delivery truck 1, namely a longitudinal axis X, a transverse axis Y and a vertical axis Z (shown in Fig. 1 and Fig. 2). Moreover, references herein to "left" and "right" refer to the corresponding sides of the delivery truck 1 when looking from the rear of the delivery truck 1 towards the front.

The chassis 10 comprises a structure 10a extending along the longitudinal axis X and including a pair of left and right chassis rails 11, to which are mounted a front drivetrain module 12, a rear drivetrain module 13, first and second high voltage battery packs 14, 15 and an on-board auxiliary power unit or range extender 16.

The front drivetrain module 12 comprises a front electric motor 17 and a front gearbox 18 which drive front wheels 19 mounted on front suspension arms 20. Similarly, the rear drivetrain module 13 comprises a rear electric motor 21 and a rear gearbox 22 which drive rear wheels 23 mounted on rear suspension arms 24.

The first high voltage battery pack 14 is mounted between the left and right chassis rails 11 and the second high voltage battery pack 15 is mounted on a longitudinal right side of the chassis 10, on an outside of the right chassis rail 11. The range extender 16 is mounted on an opposite side of the chassis 10 to the second high voltage battery pack 15, on a longitudinal left side of the chassis 10, on an outside of the left chassis rail 11. As will be explained in more detail below, the range extender 16 is arranged in the chassis 10 such that the range extender 16 can be easily moved outwards away from the rest of the chassis 10, for example for servicing or in order to be more easily removed from the chassis 10 and replaced e.g. by a battery pack.

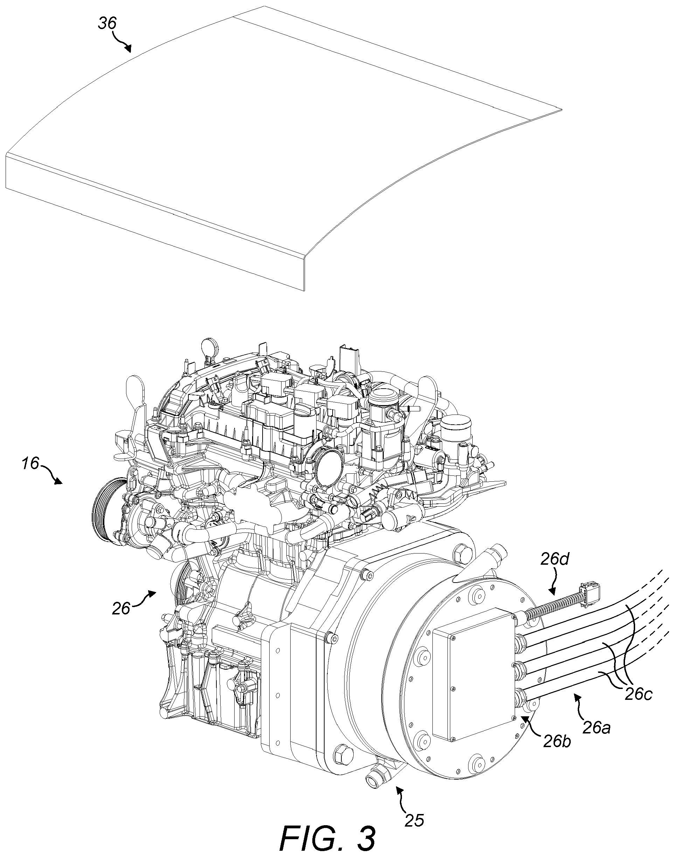

The range extender 16 is illustrated in more detail in Fig. 3. The range extender 16 comprises an electric generator 25 driven by an internal combustion engine 26. The electric generator 25 and the internal combustion engine 26 are mechanically connected to each other such that the electric generator 25 and the internal combustion engine 26 form a single unit. As shown in Fig. 3, the generator 25 is for example bolted to the internal combustion engine 26. In the exemplary embodiment shown, the range extender 16 includes a plurality of self-contained electrical and fluid connectors. The exemplary range extender 16 also comprises a high voltage electrical connector 26a to connect the range extender 16 to a control unit (not shown) of the vehicle. The high voltage electrical connector 26a comprises a 3-phase output 26b and includes output cables 26c which are preferably long enough to facilitate the removal of the range extender 16 from the chassis 10, or at least for the range extender 16 to be moved outwards a predetermined distance away from the chassis 10. The exemplary range extender 16 also includes a low voltage connector 26d. The range extender 16 also includes a fuel connector linked to a fuel tank 27 (visible in Fig. 2) to provide fuel to the internal combustion engine 26.

In the embodiment described herein, the range extender 16 is provided to recharge the first and/or the second high voltage battery packs 14, 15 when the charge of the batteries of the battery packs 14, 15 is getting low. However, the range extender 16 may also be connected to the front and/or rear electric motor(s) 17, 21 to provide power directly to the electric motor(s) 17, 21. The range extender 16 described herein operates with an internal combustion engine. However, the range extender 16 could be operated by other electricity generation means, such as fuel cells for example.

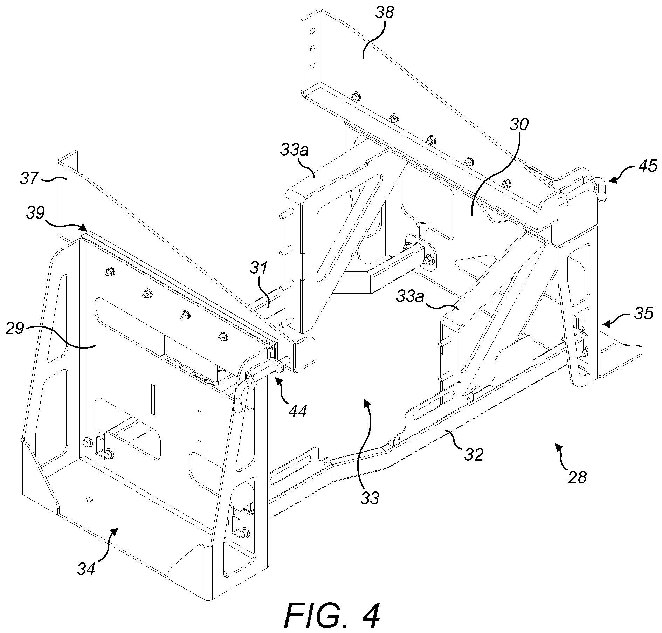

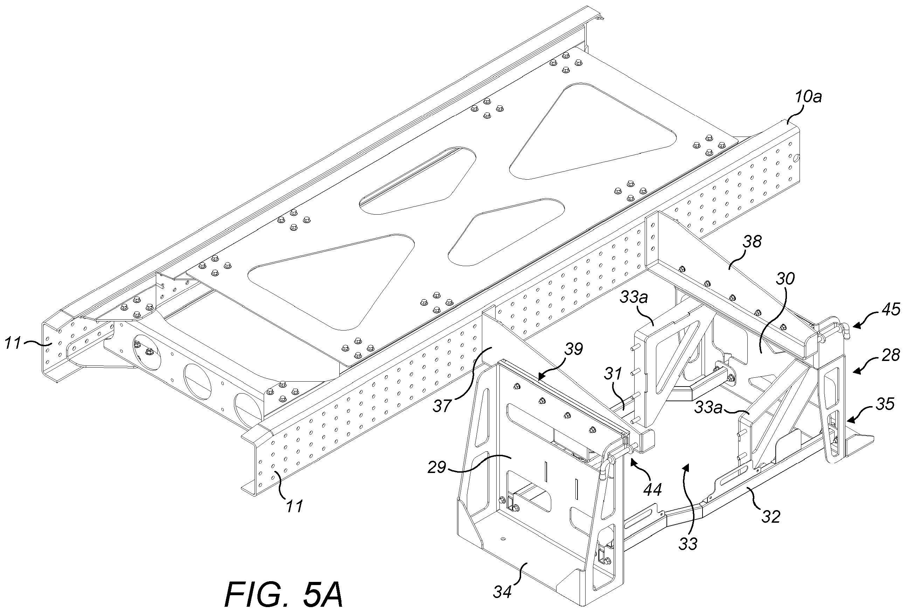

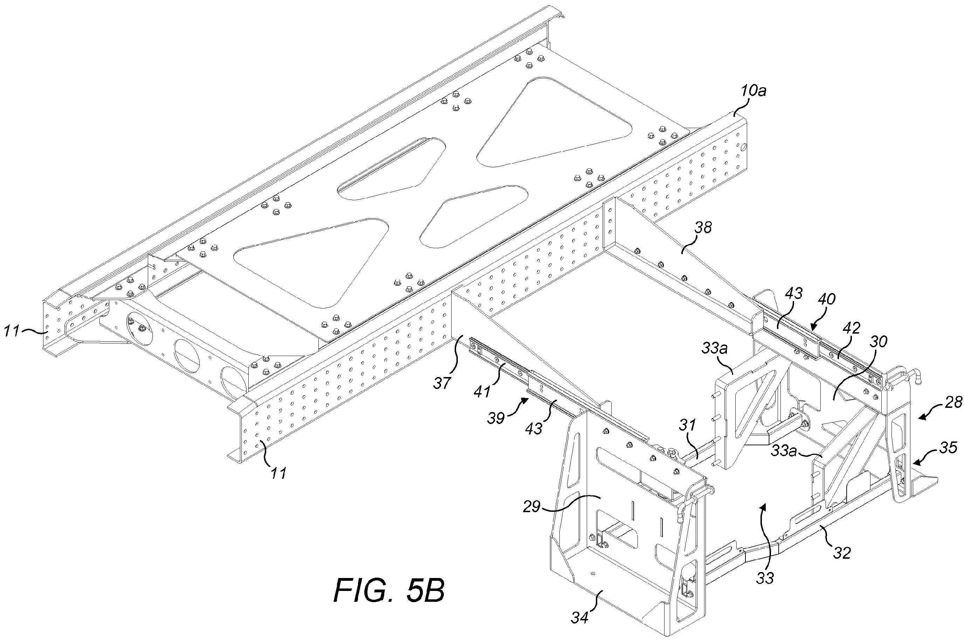

The range extender 16 is arranged in a supporting frame 28 which is slidably mounted to the structure 10a of the chassis 10. The frame 28 is illustrated in more detail in Fig. 4, Fig. 5A and Fig. 5B. The frame 28 is mounted to the longitudinal left side of the structure 10a of the chassis 10. The frame 28 is mounted in the region of a midpoint of the longitudinal left side of the structure 10a. That is, the frame 28 is located, along the longitudinal axis X, between the front drivetrain module 12 and the rear drivetrain module 13. This location of the frame 28 allows the range extender 16 to be easily accessible from the outside, for example for maintenance of the range extender 16. This location of the frame 28 also allows the electric motors 17, 21 and gearboxes 18, 22 to remain positioned at the front and at the rear of the vehicle, which is required in electric four wheel drive vehicles and also to fullfill NVH requirements. Furthermore, this configuration allows an even weight distribution on the vehicle between the front and rear axles.

As shown in Fig. 4, the frame 28 comprises a first vertical wall 29, a second vertical wall 30, a first horizontal bottom bar 31 and a second horizontal bottom bar 32. The first and second bottom bars 31, 32 extend between the first and second walls 29, 30 and connect the first and second walls 29, 30 together. The first and second walls 29, 30 and the first and second bottom bars 31, 32 define an empty volume 33 configured to receive the range extender 16. A pair of mounting brackets 33a are fixed to the second wall 30 and secure the range extender 16 to the frame 28 when the range extender 16 locates in the volume 33. In alternative arrangements, the mounting brackets 33a are fixed to the first wall 29 or on both first and second walls 29, 30. The mounting brackets 33a are configured to secure the range extender 16 to the frame 28. In one embodiment, the mounting brackets 33a maybe adjustable such that the mounting brackets 33a can secure a battery pack to the frame 28 when the range extender 16 is replaced by such a battery pack in the volume 33. Moreover, the mounting brackets 33a maybe adjustable so that different types of range extenders and/or range extenders of various sizes can be secured in the frame 28. These may include range extenders 16 having different types of and/or sizes of engines 26 or other power source to drive the electric generator 25 of the range extender 16.

On the outside of the first wall 29 is provided a first compartment 34 configured to accommodate the fuel tank 27. On the outside of the second wall 30 is provided a second compartment 35 configured to accomodate a radiator 35a and fan assembly 35b (shown in Fig. 2). Therefore, the range extender 16 and all the components required to operate the range extender 16 are provided on the sliding frame 28, and the only connection between the ranger extender 16 and other components of the vehicle in the structure 10a consists in the high and low voltage connectors 26a, 26d, which makes the range extender easily and simply removable from the vehicle.

A cover 36 (visible in Fig. 2 and Fig. 3) is provided above the volume 33 to protect the range extender 16 from mechanical damages when the range extender 16 locates in the frame 28.

The frame 28 is slideable relative to the structure 10a along a direction transverse to the longitudinal axis X. In particular, the frame 28 is slideable along the transverse axis Y. The frame 28 is slideable between a retracted position and a deployed or extended position. The frame 28 moves outward from the structure 10a along the transverse axis Y when the frame 28 is pulled from the retracted position towards the deployed position.

The frame 28 is mounted to a first arm 37 and a second arm 38 which are secured to the longitudinal left side of the structure 10a. The first and second arms 37, 38 extend transversally to the longitudinal axis X. The first and second arms 37, 38 extend from the structure 10a substantially parallel to the transverse axis Y.

The first and second walls 29, 30 and the first and second arms 37, 38 are respectively connected to each other by means of first and second telescopic guides 39, 40. The first and second telescopic guides 39, 40 are similar and therefore only the first telescopic guide 39 will be described. The first telescopic guide 39 comprises a guide rail 41 fixed to the first arm 37 and a sliding bar or slider 42 fixed to the first wall 29 of the frame 28. The guide rail 41 is bolted to the first arm 37. Likewise, the slider 42 is bolted to the first wall 29. An intermediate component 43 is arranged between the guide rail 41 and the slider 42 and designed to slide along the guide rail 41 and the slider 42. The telescopic guides 39, 40 allow the frame 28 to be slideable relative to the structure 10a, between the retracted position and the deployed position. The guide rails 41, the intermediate components 43 and the sliders 42 forming the telescopic guides 39, 40 are preferably made of aluminium. Alternatively, the telescopic guides 39, 40 may be made of steel.

A first and second locking mechanisms 44, 45 are provided in the frame 28 to lock the frame 28 in the retracted position. The first and second locking mechanisms 44, 45 are in the form of spring-loaded latches 46 movable between a locking position and a release position and biased towards the locking position. In the locking position, the latches 46 locate in apertures 47 formed in the arms 37, 38 such that the frame 28 is locked in the retracted position. Therefore, in the locking position, the latches 46 prevent the frame 28 from moving relative to the structure 10a. To unlock the frame 28 and enable the frame 28 to be pulled from the retracted position towards the deployed position, the latches 46 are moved towards the release position, i.e. pulled away from the apertures 47. The first and second locking mechanisms 44, 45 are described herein as being part of the frame 28, however, the first and/or second locking mechanisms 44, 45 could be provided respectively on the first and/or the second arms 37, 38.

Advantageously, a stop member is provided in each telescopic guide 39, 40. The frame 28 is configured to engage the stop members when the frame 28 reaches the deployed position, to prevent the frame 28 from moving beyong the deployed position, out of the structure 10a.

The slideable frame 28 helps to improve the accessibility of the range extender 16. For example, the sliding frame 28 enables the range extender 16 to be easily slid outwards for maintenance. In conventional lorries, the internal combustion engine, which is the main element which requires regular servicing, is placed under the cabin and the cabin is tilted forward for access to the internal combustion engine. In the delivery truck 1 incorporating the chassis 10 according to the present invention, the internal combustion engine, part of the range extender 16, is located on the side of the delivery truck 1, in the sliding frame 28, and under the cabin are located all the electric drive components, which necessitate little maintenance and therefore do not require to be easily accessible. Therefore, to maintain the internal combustion engine, no tilting cabin is needed, which makes the truck design much simpler.

The delivery truck 1 described herein may use the range extender 16 for long distance journeys, to supplement the battery packs when the charge of the batteries of the battery packs are getting low. For shorter distances, e.g. city route deliveries, the range extender 16 may be easily swapped out from the chassis 10 and replaced by a battery pack. The delivery truck 1 according to the present invention can therefore be adapted for long distance use, using the range extender 16, and for shorter distance use, by replacing the range extender 16 by a battery pack.

Furthermore, the slidable frame 28 enables the range extender 16 to be easily taken out of the chassis 10 or swapped out of the chassis 10 to be replaced by a range extender of a different type or size.

As mentioned above, the range extender 16 consists in a self-contained unit. This makes the range extender 16 easy to remove from the chassis 10 since only the high and low voltage electrical connectors 26a, 26d need to be unplug to remove the range extender 16 from the chassis 10.

The frame 28 is configured to support the weight of the range extender 16, which is similar to the weight of each battery pack, for example a weight of around 330 - 340kg kg.

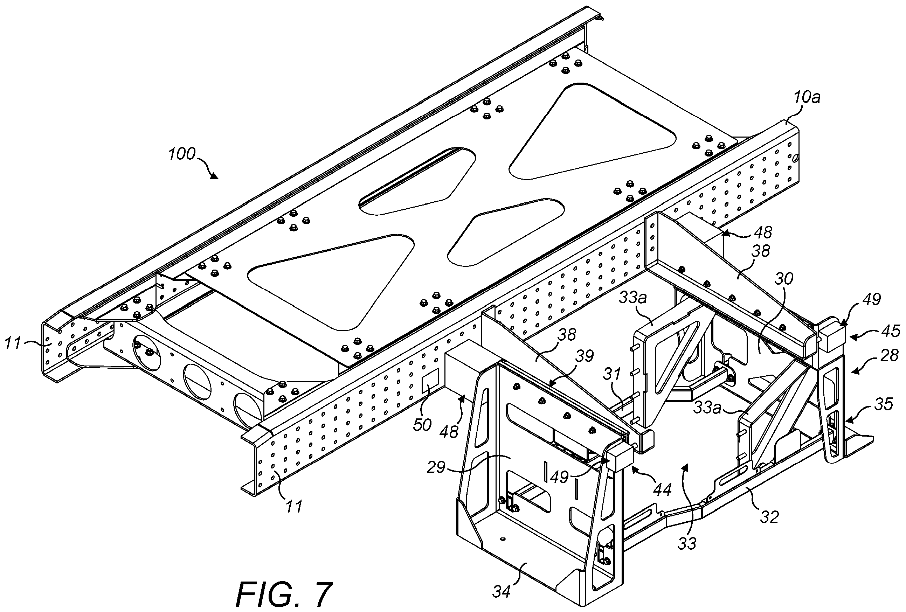

A chassis 100 according to a further embodiment of the present invention is shown in Fig. 7, which corresponds closely to the first embodiment described above. Like reference numerals have been used for like components. Some differences in relation to the first embodiment are described below.

In the embodiment shown in Fig. 7, the chassis 100 comprises first and second frame actuators 48 for automatically actuating the frame 28 between the retracted and extended positions. It will be appreciated that the frame actuators 48 are shown schematically in Fig. 7 and so do not represent the actual physical structure that such actuators 48 may comprise. Each frame actuator 48 may be an electrical or pneumatic or hydraulic actuator. For example, the frame actuator 48 may be in the form of a motor with a cog and a toothed strip on the slider 42. Alternatively, the frame actuator 48 may be in the form of a piston to drive and retract the frame 28.

The chassis 100 comprises first and second locking mechanism actuators 49 for automatically actuating the locking mechanisms 44, 45 between the locking and release positions. Each locking mechanism actuator 49 may be an electrical or pneumatic or hydraulic actuator. For example, the locking mechanism actuator 49 is in the form of a solenoid actuator.

The chassis 100 comprises means 50 for detecting if the frame 28 is in the retracted position and/or if the locking mechanisms 44, 45 are in the locked position. Again, the detecting means 50 is shown schematically in Fig. 7 and so does not represent the actual physical structure that such detecting means 50 may comprise. The detecting mean may comprise an optical sensor configured to detect the position of the frame 28, for example a position of a refertence point on the frame 28. The detecting means 50 may be a detector in the form of an electrical switch, which may be actuated in dependence on the position of the frame 28. The detecting means may be electrically connected to the vehicle cabin. The detecting means 50 may comprise an alert means to identify if the frame 28 is unlocked and/or is in the deployed position. Such alert means may be configured to alert the vehicle operator that the vehicle must not to be driven if the frame 28 is not locked and/or in the retracted position. Such alert means may comprise a warning light and/or an audible alert. The vehicle may be configured such that the vehicle is inoperable if the detecting means 50 identifies that the frame 28 is unlocked and/or is in the deployed position. For example, the vehicle may comprise a controller which controls operation of the vehicle, which is configured to render the vehicle inoperable if the detecting means 50 identifies that the frame 28 is unlocked and/or is in the deployed position. For example, the vehicle may comprise an immobiliser which immobilises the vehicle if the detecting means 50 identifies that the frame 28 is unlocked and/or is in the deployed position.

As used herein, the term electric vehicle is intended to comprise any vehicle that may be at least partially powered by electricity, and can include, although is not limited to, plug-in electric vehicles, range extender electric vehicles, hybrid electric vehicles, and plug-in hybrid electric vechicles. It will be appreciated that it may be desirable for a vehicle or vehicle chassis to be adaptable between these different types of electric vehicle. This may be to enable use of a common chassis to manufacture different types of electric vehicle, thereby reducing manufacturing costs, or for a vehicle to be modified after manufacture to different power configurations, for example between a plug-ine electric vehicle to a range extender electric vehicle. This may be desirable, for example, in fleet use, to adapt a vehicle between urban use, in which plug-in electric power is desired without the need to carry the weight of a range extender around with the vehicle, to a range extender electric vehicle for longer-range use where the range extender would be necessary.

Although the chassis structure in the exemplary embodiment comprises a pair of spaced parallel chassis rails, it will be appreciated that the chassis of the invention is not intended to be limited to this particular configuration of vehicle chassis, and may comprise any other configuration of electric vehicle chassis structure having a longitudinal axis and to which a frame is movably mounted.

The embodiment of the invention shown in the drawings and described above are exemplary embodiments only and are not intended to limit the scope of the invention, which is defined by the claims.

## Claims

1. An electric vehicle chassis (10) comprising:
a structure extending along a longitudinal axis (X); and
a frame (28) for accommodating an on-board auxiliary power unit or a range extender (16), the frame (28) being located on the longitudinal axis (X) and mounted in the region of a midpoint of said longitudinal axis (X) between a front drivetrain module (12) and a rear drivetrain module (13);
wherein the frame (28) is moveably mounted to the structure and is moveable relative to the structure between a retracted position and a deployed position and wherein the frame (28) is moveable outward from the structure from the retracted position towards the deployed position.

2. A chassis (10) according to claim 1, wherein the frame (28) is slideable between the retracted position and the deployed position.

3. A chassis (10) according to claim 2, wherein the structure comprises a first arm (37) and a second arm (38), wherein the frame (28) comprises a first wall (29) and a second wall (30), the first and second walls (29, 30) extending substantially parallel to each other, and wherein the first and second walls (29, 30) are arranged to travel respectively along the first and second arms (37, 38) when the frame (28) is moved between the retracted position and the deployed position.

4. A chassis (10) according to claim 3, wherein the first and second walls (29, 30) and the first and second arms (37, 38) are respectively connected to each other by means of first and second telescopic guides (39, 40).

5. A chassis (10) according to any preceding claim, wherein the frame (28) is moveable relative to the structure in a direction transverse (Y) to the longitudinal axis (X).

6. A chassis (10) according to any preceding claim, comprising a frame actuator (48) for automatically actuating the frame (28) between the retracted and deployed positions, optionally wherein the frame actuator (48) comprises an electrical or pneumatic or hydraulic actuator.

7. A chassis (10) according to any preceding claim, comprising means for detecting if the frame (28) is in the retracted position.

8. A chassis (10) according to any preceding claim, comprising a locking mechanism (44, 45) to lock the frame (28) in the retracted position.

9. A chassis (10) according to claim 8, wherein the locking mechanism (44, 45) is moveable between a locking position and a release position, and wherein the locking mechanism (44, 45) is biased towards the locking position.

10. A chassis (10) according to claim 9, comprising a locking mechanism actuator (49) for automatically actuating the locking mechanism (44, 45) between the locking and release positions, optionally wherein the locking mechanism actuator (49) comprises an electrical or pneumatic or hydraulic actuator.

11. A chassis (10) according to any preceding claim, wherein the frame (28) comprises one or more mounting brackets (33a) for securing the range extender (16) to the frame (28).

12. A chassis (10) according to claim 11, wherein the one or more mounting brackets (33a) are adjustable such that a battery pack or a different type of range extender (16) can be secured to the frame (28) by means of the one or more mounting brackets (33a).

13. A chassis (10) according to any preceding claim, comprising a range extender (16) mounted to the frame (28), optionally wherein the range extender (16) is removably mounted to the frame (28).

14. An electric vehicle comprising a chassis (10) according to any preceding claim.

15. An electric vehicle according to claim 14, comprising one or more electrical connectors (26a, 26d) for connecting the range extender (16) to vehicle components in the chassis (10), wherein the only connection between the range extender (16) and said vehicle components are said one or more electrical connectors (26a, 26d).

## Patentansprüche

1. Elektrofahrzeugchassis (10), Folgendes umfassend:
eine sich entlang einer Längsachse (X) erstreckende Struktur und
einen Rahmen (28) zur Aufnahme eines Bordhilfsantriebsaggregats oder eines Reichweitenverlängerers (16), wobei sich der Rahmen (28) auf der Längsachse (X) befindet und im Bereich eines Mittelpunkts der Längsachse (X) zwischen einem vorderen Antriebsstrangmodul (12) und einem hinteren Antriebsstrangmodul (13) montiert ist;
wobei der Rahmen (28) beweglich an der Struktur montiert und in Bezug zur Struktur zwischen einer eingefahrenen Stellung und einer ausgefahrenen Stellung beweglich ist und wobei der Rahmen (28) von der eingefahrenen Stellung in die ausgefahrene Stellung von der Struktur auswärts beweglich ist.

2. Chassis (10) nach Anspruch 1, wobei der Rahmen (28) zwischen der eingefahrenen Stellung und der ausgefahrenen Stellung verschiebbar ist.

3. Chassis (10) nach Anspruch 2, wobei die Struktur einen ersten Arm (37) und einen zweiten Arm (38) umfasst, wobei der Rahmen (28) eine erste Wand (29) und eine zweite Wand (30) umfasst, wobei sich die erste und zweite Wand (29, 30) im Wesentlichen parallel zueinander erstrecken, und wobei die erste und zweite Wand (29, 30) dazu angeordnet sind, jeweils entlang des ersten und zweiten Arms (37, 38) zu verfahren, wenn der Rahmen (28) zwischen der eingefahrenen Stellung und der ausgefahrenen Stellung bewegt wird.

4. Chassis (10) nach Anspruch 3, wobei die erste und zweite Wand (29, 30) und der erste und zweite Arm (37, 38) jeweils mittels einer ersten und zweiten Teleskopführung (39, 40) miteinander verbunden sind.

5. Chassis (10) nach einem der vorstehenden Ansprüche, wobei der Rahmen (28) in Bezug zur Struktur in eine Richtung quer (Y) zur Längsachse (X) beweglich ist.

6. Chassis (10) nach einem der vorstehenden Ansprüche, ein Rahmenstellglied (48) zum automatischen Betätigen des Rahmens (28) zwischen der eingefahrenen und ausgefahrenen Stellung umfassend, wobei das Rahmenstellglied (48) optional ein elektrisches oder pneumatisches oder hydraulisches Stellglied umfasst.

7. Chassis (10) nach einem der vorstehenden Ansprüche, eine Einrichtung zum Erfassen, ob sich der Rahmen (28) in der eingefahrenen Stellung befindet, umfassend.

8. Chassis (10) nach einem der vorstehenden Ansprüche, einen Verriegelungsmechanismus (44, 45), um den Rahmen (28) in der eingefahrenen Stellung zu verriegeln, umfassend.

9. Chassis (10) nach Anspruch 8, wobei der Verriegelungsmechanismus (44, 45) zwischen einer Verriegelungsstellung und einer Entriegelungsstellung beweglich ist, und wobei der Verriegelungsmechanismus (44, 45) in die Verriegelungsstellung vorgespannt ist.

10. Chassis (10) nach Anspruch 9, ein Verriegelungsmechanismusstellglied (49) zum automatischen Betätigen des Verriegelungsmechanismus (44, 45) zwischen der Verriegelungs- und Entriegelungsstellung umfassend, wobei das Verriegelungsmechanismusstellglied (49) optional ein elektrisches oder pneumatisches oder hydraulisches Stellglied umfasst.

11. Chassis (10) nach einem der vorstehenden Ansprüche, wobei der Rahmen (28) eine oder mehrere Montagehalterungen (33a) zum Fixieren des Reichweitenverlängerers (16) am Rahmen (28) umfasst.

12. Chassis (10) nach Anspruch 11, wobei die eine oder mehreren Montagehalterungen (33a) einstellbar sind, sodass ein Akkupack oder eine andere Art Reichweitenverlängerer (16) mittels der einen oder mehreren Montagehalterungen (33a) am Rahmen (28) fixiert werden kann.

13. Chassis (10) nach einem der vorstehenden Ansprüche, einen am Rahmen (28) montierten Reichweitenverlängerer (16) umfassend, wobei der Reichweitenverlängerer (16) optional lösbar am Rahmen (28) montiert ist.

14. Elektrofahrzeug, ein Chassis (10) nach einem der vorstehenden Ansprüche umfassend.

15. Elektrofahrzeug nach Anspruch 14, einen oder mehrere elektrische Verbinder (26a, 26d) zum Verbinden des Reichweitenverlängerers (16) mit den Fahrzeugkomponenten im Chassis (10) umfassend, wobei die einzige(n) Verbindung(en) zwischen dem Reichweitenverlängerer (16) und den Fahrzeugkomponenten der eine oder die mehreren elektrische(n) Verbinder (26a, 26d) ist/sind.

## Revendications

1. Châssis de véhicule électrique (10) comprenant :
une structure s'étendant le long d'un axe longitudinal (X) ; et
un bâti (28) destiné à recevoir un groupe auxiliaire de puissance embarqué ou un prolongateur d'autonomie (16), le bâti (28) étant situé sur l'axe longitudinal (X) et fixé dans la région d'un point médian dudit axe longitudinal (X) entre un module motopropulseur avant (12) et un module motopropulseur arrière (13) ;
dans lequel le bâti (28) est fixé de manière déplaçable sur la structure et est déplaçable par rapport à la structure entre une position rétractée et une position déployée et dans lequel le bâti (28) est déplaçable vers l'extérieur vis-à-vis de la structure de la position rétractée vers la position déployée.

2. Châssis (10) selon la revendication 1, dans lequel le bâti (28) peut coulisser entre la position rétractée et la position déployée.

3. Châssis (10) selon la revendication 2, dans lequel la structure comprend un premier bras (37) et un second bras (38), dans lequel le bâti (28) comprend une première paroi (29) et une seconde paroi (30), les première et seconde parois (29, 30) s'étendant de manière essentiellement parallèle l'une par rapport à l'autre, et dans lequel les première et seconde parois (29, 30) sont prévues pour se déplacer respectivement le long des premier et second bras (37, 38) lorsque le bâti (28) est déplacé entre la position rétractée et la position déployée.

4. Châssis (10) selon la revendication 3, dans lequel les première et seconde parois (29, 30) et les premier et second bras (37, 38) sont respectivement raccordés les uns aux autres au moyen de premier et second guides télescopiques (39, 40).

5. Châssis (10) selon l'une quelconque des revendications précédentes, dans lequel le bâti (28) est déplaçable par rapport à la structure dans une direction transversale (Y) à l'axe longitudinal (X).

6. Châssis (10) selon l'une quelconque des revendications précédentes, comprenant un actionneur de bâti (48) destiné à actionner automatiquement le bâti (28) entre les positions rétractée et déployée, éventuellement dans lequel l'actionneur de bâti (48) comprend un actionneur électrique ou pneumatique ou hydraulique.

7. Châssis (10) selon l'une quelconque des revendications précédentes, comprenant des moyens pour détecter si le bâti (28) se trouve dans la position rétractée.

8. Châssis (10) selon l'une quelconque des revendications précédentes, comprenant un mécanisme de blocage (44, 45) pour bloquer le bâti (28) dans la position rétractée.

9. Châssis (10) selon la revendication 8, dans lequel le mécanisme de blocage (44, 45) est déplaçable entre une position de blocage et une position de déblocage, et dans lequel le mécanisme de blocage (44, 45) est sollicité vers la position de blocage.

10. Châssis (10) selon la revendication 9, comprenant un actionneur de mécanisme de blocage (49) destiné à actionner automatiquement le mécanisme de blocage (44, 45) entre les positions de blocage et de déblocage, éventuellement dans lequel l'actionneur de mécanisme de blocage (49) comprend un actionneur électrique ou pneumatique ou hydraulique.

11. Châssis (10) selon l'une quelconque des revendications précédentes, dans lequel le bâti (28) comprend un ou plusieurs supports de fixation (33a) pour assujettir le prolongateur d'autonomie (16) au bâti (28).

12. Châssis (10) selon la revendication 11, dans lequel le ou les supports de fixation (33a) sont réglables de telle sorte qu'un bloc-batterie ou un type différent de prolongateur d'autonomie (16) puisse être assujetti au bâti (28) au moyen du ou des supports de fixation (33a).

13. Châssis (10) selon l'une quelconque des revendications précédentes, comprenant un prolongateur d'autonomie (16) fixé sur le bâti (28), éventuellement dans lequel le prolongateur d'autonomie (16) est fixé sur le bâti (28) de manière amovible.

14. Véhicule électrique comprenant un châssis (10) selon l'une quelconque des revendications précédentes.

15. Véhicule électrique selon la revendication 14, comprenant un ou plusieurs connecteurs électriques (26a, 26d) destinés à connecter le prolongateur d'autonomie (16) à des composants du véhicule dans le châssis (10), dans lequel ledit ou lesdits connecteurs électriques (26a, 26d) constituent la seule connexion entre le prolongateur d'autonomie (16) et lesdits composants du véhicule.
